(19) Europäisches Patentamt / European Patent Office / Office européen des brevets

(11) **EP 2 410 311 B1**

(12) **EUROPEAN PATENT SPECIFICATION**

| | |
|---|---|
| (45) Date of publication and mention of the grant of the patent: **17.04.2019 Bulletin 2019/16** | (51) Int Cl.: **G01M 15/11** *(2006.01)* |

(21) Application number: **11170627.1**

(22) Date of filing: **20.06.2011**

(54) **Misfire Determination Device for Multi-Cylinder Four-Cycle Engine**

Fehlzündungsbestimmungsvorrichtung für Viertaktmotor mit mehreren Zylindern

Dispositif de détermination de ratés pour moteur multicylindrique à quatre cycles

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2010 JP 2010166089**

(43) Date of publication of application:
**25.01.2012 Bulletin 2012/04**

(73) Proprietor: **AISIN SEIKI KABUSHIKI KAISHA Kariya-shi, Aichi-ken 448-8650 (JP)**

(72) Inventor: **Ishikawa, Kazuhiro Kariya-shi, Aichi-ken, 448-8650 (JP)**

(74) Representative: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) References cited:
**EP-A1- 1 918 688      EP-A2- 0 790 396
DE-A1- 4 403 348      US-A- 5 287 737**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

This disclosure generally relates to a misfire determination device for a multi-cylinder four-cycle engine.

BACKGROUND DISCUSSION

Disclosed in JP2008-190433A is an example of a known misfire determination device for a multi-cylinder four-cycle engine. The misfire determination device for the multi-cylinder four-cycle engine disclosed in JP2008-190433A is configured so as to calculate an average rotation number of a crankshaft of an engine per one cycle on the basis of rotation pulses of the crankshaft and so as to calculate a rotational deviation, which represents a difference between the average rotation number of the crankshaft in the current cycle and an average rotation number of the crankshaft in a previous (last) cycle. Then, the misfire determination device for the multi-cylinder four-cycle engine disclosed in JP2008-190433A compares a calculated value of a decreased amount of the rotation number, which corresponds to the rotational deviation, with a preliminarily set an allowable decreased amount of the rotation number. The misfire determination device for the multi-cylinder four-cycle engine disclosed in JP2008-190433A determines that a misfire of the engine occurs in a case where the calculated value of the decreased amount of the rotation number exceeds the allowable decreased amount of the rotation number.

The misfire determination device for the multi-cylinder four-cycle engine disclosed in JP2008-190433A calculates the difference (i.e. the rotational deviation) between the average rotation number in a specific cycle and the average rotation number in a cycle prior to the specific cycle as a quantity indicating a possibility of an occurrence of the misfire. However, generally, the rotation number of the engine periodically increases and decreases in response to cycles. Accordingly, because the misfire determination device for the multi-cylinder four-cycle engine disclosed in JP2008-190433A does not choose cycles to be used for calculating the rotational deviation in view of the normal periodical increase and decrease of the engine rotations, the periodical increase and decrease of the engine rotations may be mistakenly determined as the misfire (i.e. misdetection).

Additionally, the misfire determination device for the multi-cylinder four-cycle engine disclosed in JP2008-190433A is configured so as to eventually determine that the misfire occurs at the engine in a case where a number of times where the calculated value of the decreased amount of the rotation number exceeding the allowable decreased amount of rotation number exceeds a preliminarily set allowable number of times in a predetermined period of time (e.g. 100 cycles). However, even in this case, because the rotational deviation, which is calculated without considering the normal periodical increase and decrease of the engine rotation, is used, a reliability of a misfire determination may be reduced.

A need thus exists to provide a multi-cylinder four-cycle engine, which determines an occurrence of a misfire at the engine with high accuracy. A misfire determination means according to the preamble of claim 1 is known from DE 44 03 348 A1 and EP 0 790 396 A2. Further relevant prior art is disclosed in US 5 287 737 and EP 1 918 688 A.

SUMMARY

According to an aspect of this disclosure, a misfire determination device for a multi-cylinder four-cycle engine, which is configured so as to determine a misfire on the basis of a pulse outputted each time when a crankshaft rotates by a predetermined rotational angle while the multi-cylinder four-cycle engine having a plurality of cylinders is controlled to be driven at a constant speed, the misfire determination device includes a timing means for timing an elapsed time until a number of pulses in a stroke, which corresponds to the predetermined rotational angle of the crankshaft to be formed in a period time from when a combustion process occurs at a first cylinder and another combustion process occurs at a second cylinder, are counted each time when the pulse is outputted, a deviation calculating means for calculating a deviation between a first time, which corresponds to an elapsed time when a current pulse is counted, and a second time, which corresponds to an elapsed time when the pulse prior to the current pulse by the rotational angle corresponding to the stroke is counted, an integrated value calculating means for calculating an integrated value in a manner where the calculated deviation is integrated by the predetermined rotational angle of the crankshaft, and a determining means for determining whether or not the misfire occurs at any one of the plurality of the cylinders on the basis of a magnitude relationship between the calculated integrated value and a predetermined threshold value.

Accordingly, the misfire determination device for the multi-cylinder four-cycle engine accurately detecting the misfire may be achieved.

According to another aspect of this disclosure, the integrated value calculating means calculates the integrated value in a manner where the calculated deviation is integrated by the predetermined angle corresponding to the stroke.

Generally, in a case where the multi-cylinder four-cycle engine is controlled to be driven at the constant speed, a rotational speed of the crankshaft (i.e. an engine rotational speed) fluctuates every rotational angle of the crankshaft to be formed in the period of time from when the combustion occurs at the first cylinder and the next combustion occurring at the second cylinder. According to this disclosure, the timing means times the elapsed time until the pulses P to be outputted in the stroke, which corresponds to the rotational angle of the crankshaft to be formed in the period of time from when the combustion occurs at the first cylinder to when the next combustion occurs at the second cylinder, are counted, each time when the pulse is inputted into the timing means. The elapsed time (i.e. the first time and the second time greatly depends on the combustion state of each of the cylinders. Then, the deviation calculating means calculates the deviation between the first time and the second time. The deviation is obtained as a result of a comparison between the elapsed time in one stroke and the elapsed time in a previous stroke, in other words, a result of a comparison between the combustion state of the first cylinder and the combustion state of another one specific cylinder at which the combustion is executed prior to the first cylinder. Therefore, the deviation significantly fluctuates in response to an occurrence of the misfire at any one of the cylinders. Furthermore, the fluctuation of the deviation continuously occurs in the stroke with reference to a timing when the deviation starts being influenced by the misfire as a starting point. Therefore, according to this disclosure, the integrated value calculating means integrates the calculated deviation by the predetermined rotational angle of the crankshaft, so that the integrated value is calculated so as to represent an accumulation and an emphasis of the fluctuation of the deviation in response to the occurrence of the misfire. Accordingly, the determining means may accurately determine the misfire of any one or the cylinders (i.e. the multi-cylinder four-cycle engine) on the basis of the magnitude relationship between the calculated integrated value and the predetermined threshold value.

According to a further aspect of this disclosure, the determining means further includes a counting means for separately counting a number of times when the misfire is determined on the basis of the magnitude relationship between the calculated integrated value and the predetermined threshold value in a rotational angle range of the crankshaft corresponding to a predetermined number of cycles relative to each of all of the pulses outputted at each different timing in one cycle, so that the determining means concludes a determination of the misfire in a case where the number of times counted relative to the pulse at one specific timing in the one cycle exceeds a predetermined misfire determination value.

Accordingly, the determining means concludes the determination that the misfire occurs at any one of the cylinders in a case where a counted number relative to the any one of the cylinders in response to the pulse at one specific timing in one cycle exceeds the predetermined misfire determination value. Therefore, even if the magnitude relationship between the calculated integrated value and the predetermined threshold value temporarily indicates that the misfire occurs at the multi-cylinder four-cycle engine because of a disturbance and the like, the determining means does not immediately conclude the determination of the misfire. Accordingly, a specific process such as stopping the multi-cycle four-cycle engine and the like may be avoided from being frequently repeated in response to each determination of the misfire.

Additionally, "all of pulses outputted at each different timing in one cycle" refers to "the pulse in all sets of predetermined number of different timings, in a case where a set of predetermined number of pulse output timings is preliminarily prepared for each timing when the pulse is outputted and each pulse is allocated to the corresponding output timing in each set of the predetermined number of the output timings". For example, in a case where 2N pulses are outputted at the different timings in the one cycle (i.e. a number of pulses outputted at different timings while the crankshaft rotates once is N), in other words, in a case where 2N different timings of outputting the pulse exist in the one cycle, a set of the 2N output timings are preliminarily prepared for each output timing and the 2N pulses are allocated to corresponding timings in each of 2N sets of the 2N output timings. Then, the counting means counts a number of times when the misfire is determined relative to each of the pulses in each set of the output timings.

According to a further aspect of this disclosure, the misfire determination device for the multi-cylinder four-cycle engine further includes a stopping means for stopping the multi-cylinder four-cycle engine in a case where the determination means concludes the determination of the misfire at any one of the plurality of the cylinders.

Accordingly, the stopping means stops the multi-cylinder four-cycle engine, so that a burnout of a catalyst for purifying an exhaust gas, an occurrence of an abnormal vibration and the like may be avoided.

According to a further aspect of this disclosure, the multi-cylinder four-cycle engine is configured so as to drive a compressor of a heat pump-type air conditioning apparatus.

According to a further aspect of this disclosure, the multi-cylinder four-cycle engine is configured to operate by a fuel gas.

BRIEF DESCRIPTION OF THE DRAWINGS

The foregoing and additional features and characteristics of this disclosure will become more apparent from the following detailed description considered with the reference to the accompanying drawings, wherein:

> Fig. 1 is a diagram schematically illustrating an engine to which a misfire determination device for a multi-cylinder four-cycle engine according to an embodiment is adapted;
> Fig. 2A is a time chart indicating an output of pulses in a case where a misfire does not occur at cylinders of the engine;
> Fig. 2B is time chart indicating the output of the pulses in a case where the misfire occurs at one of the cylinders of the engine;

Fig. 3 is a graph indicating a shift of a deviation relative to a pulse number;

Fig. 4 is a graph indicating a shift of an integrated value relative to the pulse number;

Fig. 5 is a graph indicating a shift of a number of misfire determination relative to the pulse number; and

Fig.6 is a flowchart indicating a misfire determination process according to the embodiment.

DETAILED DESCRIPTION

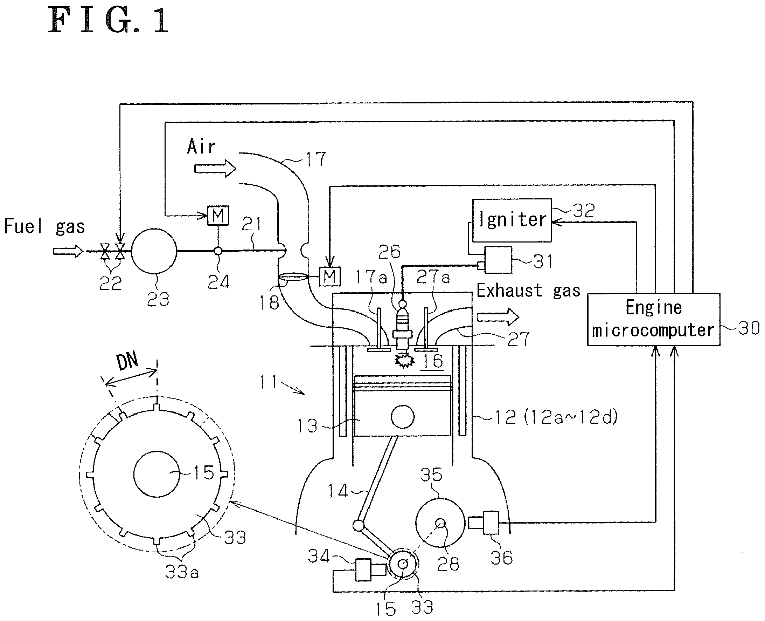

An embodiment of a misfire determination device for a multi-cylinder four-cycle engine will be described below with reference to the attached drawings. Illustrated in Fig. 1 is a diagram schematically illustrating a four-cylinder four (stroke)-cycle engine 11 (which will be hereinafter referred to as an engine 11), to which the misfire determination device for the multi-cylinder four-cycle engine is adapted. The engine 11 serves as, for example, a driving source for a compressor of a heat pump-type air conditioning apparatus. Furthermore, the engine 11 is configured as a gas engine that is actuated by a fuel gas. Still further, the engine 11 includes four cylinders 12 (i.e. a first cylinder 12a, a second cylinder 12b, a third cylinder 12c and a fourth cylinder 12d), which are arranged in tandem. A piston 13 is accommodated within each of the cylinders 12 while allowing the piston 13 to reciprocate (i.e. move along a longitudinal direction of the corresponding cylinder 12). The pistons 13 are connected to a crankshaft 15 via corresponding connecting rods 14. Accordingly, a reciprocation of each piston 13 is converted to a rotation (i.e. a rotary movement) of the crankshaft 15 via the corresponding connecting rod 14.

An intake passage 17 is connected to a combustion chamber 16 of each cylinder 12, so that an ambient air is supplied to the combustion chamber 16 of each cylinder 12 through the corresponding intake passage 17. A throttle valve 18 is provided at a portion of each of the intake passages 17. Furthermore, a fuel passage 21 is connected to a portion of each of the intake passage 17 at an upper stream side of a flow of the air relative to the corresponding throttle valve 18. A gas electromagnetic valve 22, a gas regulator 23 and a fuel adjustment valve 24 are provided at the fuel passage 21. More specifically, the fuel gas (e.g. propane gas, a natural gas and the like) introduced from a fuel gas supply source (e.g. a fuel tank and the like) to each of the fuel passages 21 is supplied to each of the intake passages 17 via the corresponding gas electromagnetic valve 22, the gas regulator 23 and the fuel adjustment valve 24. Accordingly, an amount of air/fuel mixture, which refers to air containing the fuel gas, supplied to each of the intake passages 17 at the upstream side relative to the corresponding throttle valve 18 is controlled (adjusted) at the throttle valve 18 and the adjusted air/fuel mixture is introduced into each of the combustion chambers 16.

An ignition plug 26 is provided at the combustion chamber 16 of each cylinder 12, so that the air/fuel mixture introduced into the combustion chamber 16 is exploded and combusted in response to an ignition of the ignition plug 26. Then, the fuel gas having a high temperature and a high pressure generated at the combustion chamber 16 of each cylinder 12 when the air-fuel mixture is exploded and combusted reciprocates the corresponding piston 13, thereby rotating the crankshaft 15. Accordingly, a driving force of the engine 11 is generated. Then, the air/fuel mixture after being combusted (i.e. an exhaust gas) is exhausted to an exhaust passage 27, which is in communication with the combustion chamber 16 of each cylinder 12.

An intake valve 17a is provided at an opening portion of the intake passage 17 opening to the combustion chamber 16 of each cylinder 12. An exhaust valve 27a is provided at an opening portion of the exhaust passage 27 opening to the combustion chamber 16 of each cylinder 12. A cam shaft 28 is connected to the crankshaft 15 via a predetermined transmitting member (e.g. a timing belt and the like) so that the cam shaft 28 is actuated in response to the rotation of the crankshaft 15. A rotational transmission ratio between the crankshaft 15 and the cam shaft 28 is set to one-to-two, so that while the crankshaft 15 rotates twice, the cam shaft 28 rotates once. Furthermore, the intake valve 17a is actuated to be opened and closed in response to the rotation of the crankshaft 15. On the other hand, the exhaust valve 27a is actuated to be opened and closed in response to a rotation of the cam shaft 28.

The engine 11 repeats a set of processes of an intake of the fuel (the air/fuel mixture), a compression of the fuel, a combustion (an explosion) of the fuel and an exhaust of the fuel (i.e. four strokes in one cycle) at each of the cylinders 12, thereby rotating the crankshaft 15 via the reciprocations of the pistons 13. Additionally, the combustion processes of the first, second, third and fourth cylinders 12a, 12b, 12c and 12d are executed at equal intervals therebetween and the crankshaft 15 is rotated twice per one cycle.

The engine 11 having the above-described configuration is controlled by an engine microcomputer 30. More specifically, the engine microcomputer 30 is electrically connected to each of the throttle valve 18, the gas electromagnetic valve 22 and the fuel adjustment valve 24 of each fuel passage 21, so that the engine microcomputer 30 controls an actuation of each of the throttle valve 18, the gas electromagnetic valve 22 and the fuel adjustment valve 24. Furthermore, the engine microcomputer 30 is electrically connected to an igniter 32, which is configured so as to actuate an ignition coil 31 that supplies a voltage to each of the ignition plugs 26 to be switched, so that the engine microcomputer 30 controls an ignition of each of the ignition plugs 26 via the igniter 32 and the like.

A rotor 33, which has plural protrusions 33a (in this embodiment twelve protrusions 33a) arranged so as to keep a predetermined angular interval DN (e.g. 30 degrees) between the neighboring protrusions 33a, is connected to the crankshaft 15, so that the rotor 33 is rotated together with the crankshaft 15 as a unit. The engine microcomputer 30 is electrically connected to a crank position sensor 34, which is arranged so as to face the rotor 33 (the protrusions 33a) in a radial direction thereof. The crank position sensor 34 generates and outputs a pulse P each time when each protrusion 33a of the rotor 33 passes the crank shaft sensor 34 in response to the rotation of the crankshaft 15, in other words, each time when the crankshaft 15 rotates by the predetermined angle DN. The engine microcomputer 30, on the other hand, detects a rotation (an amount of rotation), a rotational speed and the like of the crankshaft 15 on the basis of the pulse(s) P. Then, the engine microcomputer 30 controls the actuation of each of the throttle valves 18 and the like on the basis of the detected rotation of the crankshaft 15 and the like in order to, for example, control an engine rotational speed (i.e. the rotational speed of the crankshaft 15) to be constant (i.e. a constant speed rotation control). Furthermore, the engine microcomputer 30 determines whether or not a misfire occurs at the engine 11 on the basis of the pulses P in the constant speed rotation control. In a case where the engine microcomputer 30 concludes (confirms) a determination that the misfire occurs, the engine microcomputer 30, for example, stops actuating the engine 11 (i.e. a stopping means).

Furthermore, a rotor 35, which has a similar configuration as the rotor 33 and having plural protrusions, is connected to the cam shaft 28, so that the rotor 35 is rotated together with the cam shaft 28 as a unit. The engine microcomputer 30 is electrically connected to a cam position sensor 36, which is arranged so as to face the rotor 35 in a radial direction thereof. The cam position sensor 36 generates and outputs a pulse each time when each protrusion of the rotor 35 passes the cam position sensor 36 in response to the rotation of the cam shaft 28, in other words, each time when the cam shaft 28 rotates by a predetermined angle corresponding to an angle formed between the neighboring protrusions of the rotor 35. The engine microcomputer 30 detects a rotation (i.e. an amount of rotation), a rotational speed and the like of the cam shaft 28 on the basis of the pulse(s).

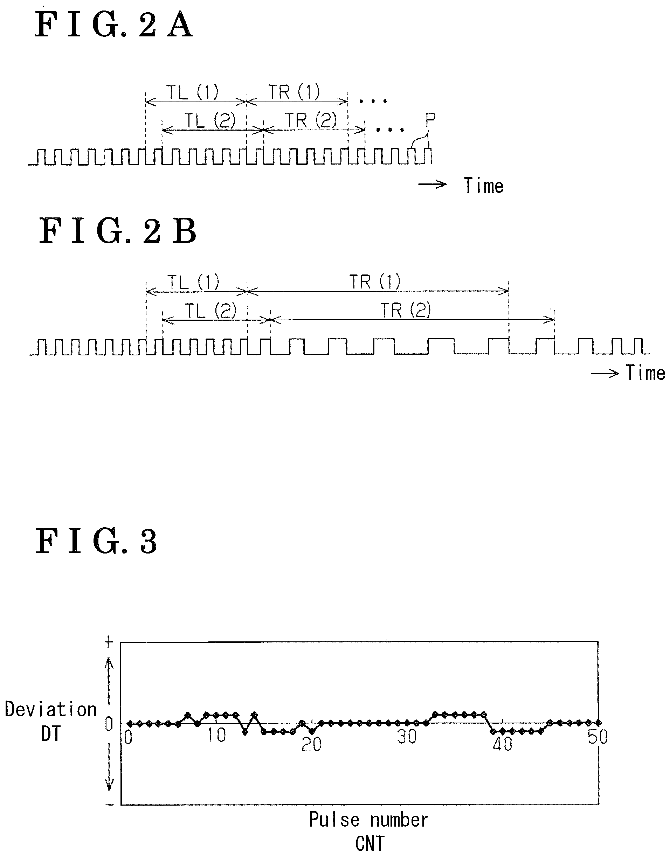

A misfire determination process executed by the engine microcomputer 30 will be described below. Illustrated in Fig. 2A and Fig. 2B are time charts indicating an example of an output of the pulses P. As illustrated in Fig. 2A, each time when the pulse P is inputted into the engine microcomputer 30 (i.e. each time when the crankshaft 15 rotates by the predetermined angle DN), the engine microcomputer 30 times an elapsed time T, which corresponds to a duration time until six pulses P including the pulse P, which triggers the timing of the elapsed time T, is counted (i.e. a timing means). Additionally, in a case where the engine 11 is configured as a four-cylinder four-cycle engine, the combustion process is executed at each of two different cylinders 12 (i.e. two combustion processes in total) in each one rotation of the crankshaft 15. In this case, the elapsed time T corresponds to a period of time until the pulses P, which are to be inputted into the engine microcomputer 30 in a stroke TN corresponding to a rotational angle of the crankshaft 15 to be formed from a time when the combustion occurs at one of cylinders 12 (any desired one of the cylinders 12 which serves as a first cylinder) to when the next combustion occurs at another one of cylinders 12 (which serves as a second cylinder) (i.e. 360 degrees / 2 = 180 degrees = 30 degrees * 6), are counted. Accordingly, the elapse time T greatly depends on a combustion state of each cylinder 12 while the constant speed rotation control is executed to the engine 11. However, the elapsed time T is sequentially timed each time when the pulse P is inputted into the engine microcomputer 30 and the elapsed time T is not timed in response to the combustion process of any desired cylinder(s) 12.

Each time when the pulse P is inputted into the engine microcomputer 30, the engine microcomputer 30 calculates a deviation DT between a first time TR, which represents the elapsed time T when the current pulse P is counted, and a second time TL, which represents the elapsed time T when the pulse P obtained prior to the current pulse P by the predetermined rotational angle corresponding to the stroke TN (i.e. DT = TR - TL) (i.e. a deviation calculating means) is counted. The deviation DT is obtained by comparing the elapsed time T (the first time TR) for one stroke TN with the elapsed time T (the second time TL) for the previous (the last) stroke TN. In other words, the deviation DT is a result of a comparison between the combustion state of one of the cylinders 12 and the combustion state of another one of the cylinders 12 (i.e. another one of remaining three cylinders 12) at which the combustion process is executed prior to the one of the cylinders 12. Therefore, the deviation DT significantly fluctuates when the misfire occurs at any one of the cylinders 12 (i.e. at the engine 11) while the constant speed rotation control is executed to the engine 11.

For example, as illustrated in Fig. 2A, in a case where the misfire does not occur at any one of the cylinders 12, the first time TR corresponding to the combustion process of the one of the cylinders 12 and the second time TL corresponding to the combustion process of the another one of the cylinders 12, which is executed prior to the combustion process of the one of the cylinder 12, become equal, so that the deviation DT is stabilized at a very small value or zero (0). On the other hand, as illustrated in Fig. 2B, in a case where the misfire is detected in the first time TR, the first time TR is significantly extended when comparing to the second time TL, so that the deviation DT greatly fluctuates to a positive side (i.e. towards a plus sign). Illustrated in Fig. 3 is a graph indicating an example of a shift of the deviation DT, which is calculated each time when the pulse P is inputted into the engine microcomputer 30, relative to a shift of a pulse number CNT (i.e. a number of the pulse P).

Furthermore, the engine microcomputer 30 calculates an integrated value RC each time when the pulse P is inputted into the engine microcomputer 30 (i.e. an integrated value calculating means). The integrated value RC is obtained by integrating the deviation DT by the rotational angle corresponding to the stroke TN. In the case where the misfire does not occur at any one of the cylinders 12 (i.e. the engine 11), the integrated value RC indicates a rotational fluctuation (an amount of rotational fluctuation), which is obtained by smoothing the fluctuation of the deviation DT occurring due to a disturbance and the like. On the other hand, in the case where the misfire occurs at any one of the cylinders 12 (i.e. the engine 11), the integrated value RC indicates the rotational fluctuation, which is obtained by accumulating the fluctuations of the deviation DT in response to the misfire and which emphasizes the fluctuations of the deviation DT.

For example, when assuming that the first time when one pulse P (i.e. a first pulse P) is counted is represented by TR(1), the second time when the first pulse P is counted is represented by TL(2), the first time when the next pulse P (i.e. a second pulse P) is counted is represented by TR(2), the second time when the second pulse P is counted is represented by TL(2), the first time when a third pulse P (i.e. the pulse P next to the second pulse P) is counted is represented by TR(3), the second time when the third pulse P is counted is represented by TL(3), the first time when a fourth pulse P (i.e. the pulse P next to the third pulse P) is counted is represented by TR(4), the second time when the fourth pulse P is counted is represented by TL(4), the first time when a fifth pulse P (i.e. the pulse P next to the fourth pulse P) is counted is represented by TR(5), the second time when the fifth pulse P is counted is represented by TL(6), the first time when the last pulse P to be generated in the end of the stroke TN is counted is represented by TR(6) and the second time when the last pulse P is counted is represented by TL(6), the integrated value RC is calculated in accordance with the following formula:

$$RC = \sum_{i=1}^{6} \left( TR(i) - TL(i) \right)$$

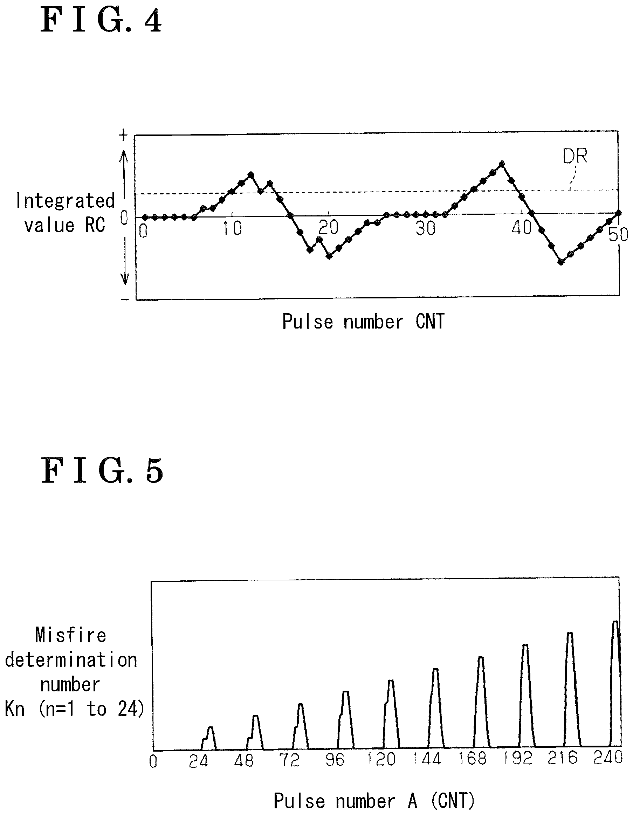

Illustrated in Fig. 4 is an example of a shift of the integrated value RC, which is obtained each time when the pulse P is inputted into the engine microcomputer 30, relative to the pulse number CNT (i.e. the number of the pulse P). As illustrated in Fig. 4, the integrated value RC shifts while emphasizing the fluctuation of the integrated value RC when comparing to the graph in Fig. 3.

Then, the engine microcomputer 30 determines a magnitude relationship between the integrated value RC, which is calculated in the above-mentioned manner, and a determination value DR, which serves as a predetermined threshold value. The determination value DR is set on the basis of an optimal integrated value RC (i.e. the rotational fluctuation), by which the misfire of any one of the cylinders 12 (i.e. the engine 11) is estimable. The engine microcomputer 30 is configured so as to determine that the misfire occurs in a case where the integrated value RC is greater than the determination value DR and increment a misfire determination number Kn (i.e. a number of times when the misfire is determined) by one (1) (i.e. a counting means). On the other hand, the engine microcomputer 30 determines that the misfire does not occur in a case where the integrated value RC is equal to or smaller than the determination value DR and maintains the current misfire determination number Kn (without incrementing the misfire determination number Kn). Additionally, the misfire determination number Kn is separately counted relative to each of twenty-four pulses P, which is generated while the crankshaft 15 rotates twice (i.e. one cycle). In other words, the misfire determination number Kn (n = 1 to 24) is assigned to each of twenty-four pulses P. More specifically, in a case where twenty-four pulses P are outputted in one cycle, i.e. in a case where the pulse P is outputted at twenty-four different timings within one cycle and a set of twenty-four output timings is preliminarily grouped relative to each output timing (i.e. each pulse P) so that twenty-four sets of the output timings are formed so as to be displaced therebetween by one pulse output timing (i.e. by one pulse P). Furthermore, each outputted pulse P is allocated at the corresponding output timing in each of twenty-four set of the output timings. Accordingly, the misfire determination number is counted relative to each pulse P in each set of the twenty-four output timings. For example, in a case where the predetermined misfire determination number Kn is updated relative to one specific pulse P and the like, the next time when the predetermined misfire determination number Kn of the one specific pulse P is updated is one cycle thereafter, so that the number of time when the misfire occurs at one of the cylinders 12 corresponding to the one specific pulse P is prominently elicited by using the specific misfire determination number Kn. Accordingly, even in a case where the engine 11 is driven at high speed and with less load applied thereto (i.e. a high-speed low-load state), when a complete misfire occurs at one specific cylinder 12, the corresponding misfire determination number Kn gradually increases in response to a repeat of the cycle because of the rotational fluctuation occurring each cycle (i.e. each time when the crankshaft 15 rotates twice).

Furthermore, in this embodiment, the engine microcomputer 30 executes the update of the misfire determination number Kn and the like for up to a predetermined cycle (e.g. up to tenth cycle, i.e. for two-hundreds and twenty pulses P). Then, the engine microcomputer 30 once clears all of the misfire determination numbers Kn when the predetermined cycle ends. Accordingly, the misfire determination number Kn allocated to each pulse P corresponds to a number of cycles up to the predetermined cycle (e.g. ten cycles).

Illustrated in Fig. 5 is a graph indicating an example of a shift of the accumulated misfire determination numbers Kn (n = 1 to 24) relative to a pulse number A of the pulse P. Additionally, the pulse number A is reset to one (1) each time when the pulse number CNT is counted up to the predetermined cycle (e.g. each time when the pulse number CNT reaches two-hundreds and forty). In this embodiment, the pulse number A is indicated as a continuous function in order to facilitate the explanation. However, in practice, all of the misfire determination numbers Kn (n = 1 to 24) are separately and independently updated each time when one cycle ends. As illustrated in Fig. 5, the misfire determination number Kn significantly increases at a timing when the pulse number A is proximate to multiples of twenty-four. Accordingly, the engine microcomputer 30 determines that the misfire frequently occurs at one specific cylinder 12, which is in a combustion process, in a correlation with the timings.

Each time when each misfire determination number Kn (n = 1 to 24) is updated and the like, the engine microcomputer 30 determines a magnitude relationship between each misfire determination number Kn and a predetermined misfire determination value Kth. The misfire determination value Kth is set to have a value optimal to eventually conclude the determination that the misfire occurs at any one of the cylinders 12 on the basis of each misfire determination number Kn, which is accumulated each time when one cycle ends. The engine microcomputer 30 is configured so as to conclude the determination that the misfire occurs at any one of the cylinders 12 (i.e. the engine 11) in a case where the corresponding misfire determination number Kn is equal to or greater than the misfire determination value Kth (i.e. a determining means). In this case, for example, the engine microcomputer 30 executes a process such as stopping the engine 11 and the like. In a case where the engine 11 is kept being driven while the misfire frequently occurs at any one of the cylinders 12, for example, a catalyst for purifying the exhaust gas may be burnt out, an abnormal vibration may occur and the like. Therefore, in this embodiment, the engine microcomputer 30 is configured so as to conclude the determination of the misfire at any one of the cylinders 12 (i.e. the engine 11) by using the misfire determination numbers Kn in order to avoid an unnecessary determination of an occurrence of the misfire occurring each time when the integrated value RC exceeds the determination value DR because of the influence of the disturbance and the like. As described above, the misfire of one specific cylinder 12 in the combustion process is estimated on the basis of the corresponding misfire determination number Kn, by which the occurrence of the misfire is determined, in the correlation with the timing when the corresponding misfire determination number Kn is incremented.

On the other hand, the engine microcomputer 30 concludes the determination that the misfire does not occur at one of the cylinders 12 in a case where the corresponding misfire determination number Kn is smaller than the misfire determination value Kth. Specifically, the engine microcomputer 30 is configured so as not to conclude the determination of the misfire on the basis of all of the misfire determination numbers Kn. In this embodiment, the engine microcomputer 30 is configured so as to clear all of the misfire determination numbers Kn (N = 1 to 24) once each misfire determination number Kn is counted up for the predetermined number of cycles, and then, the engine microcomputer 30 once again starts counting each misfire determination number Kn.

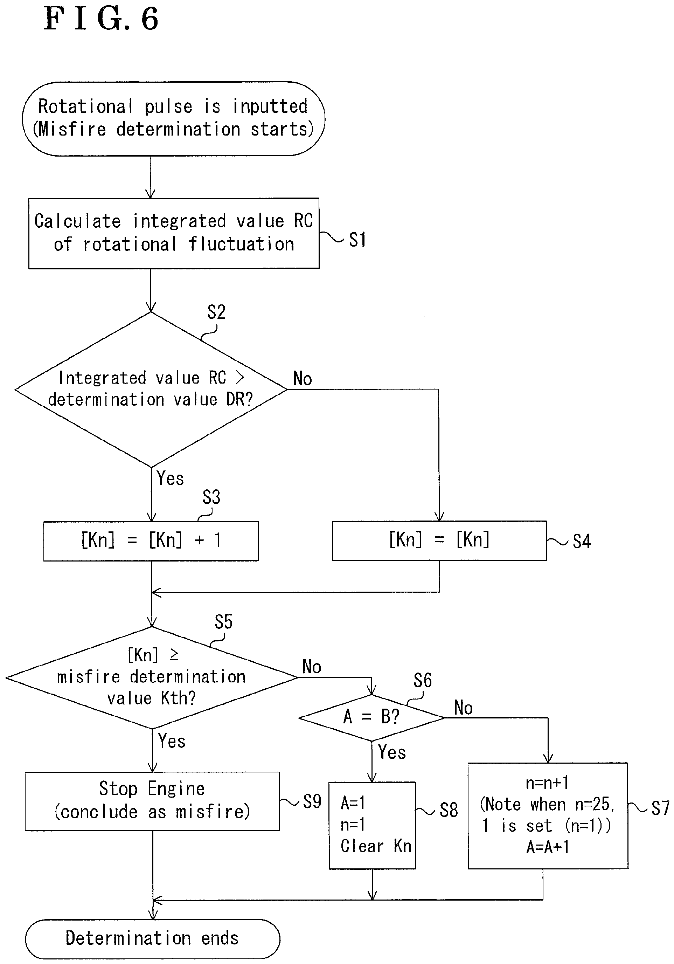

The misfire determination (i.e. the determination whether or not the misfire occurs) executed by the engine microcomputer 30 will be descried below with reference to a flowchart in Fig. 6. The process is repeatedly executed each time when the pulse P is inputted into the engine microcomputer 30 under the assumption that the engine 11 is in a stably driven state where the rotational speed of the engine 11 falls within a predetermined range while the constant speed rotational control is executed to the engine 11.

As illustrated in Fig. 6, when the process is executed, the integrated value RC of the rotational fluctuation is calculated in the above-described manner (step S1). Then, the engine microcomputer 30 determines whether or not the integrated value RC exceeds the determination value DR (step S2). In the case where the engine microcomputer 30 determines that the integrated value RC exceeds the determination value DR (Yes in step S2), the misfire determination number Kn of the pulse P at the predetermined timing is incremented by one (1) (step S3). On the other hand, in the case where the engine microcomputer 30 determines that the integrated value RC is equal to or smaller than the determination value DR (No in step S2), the misfire determination number Kn of the pulse P at the predetermined timing is maintained (step S4).

Then, the engine microcomputer 30 determines whether or not the misfire determination number Kn of the pulse P at the predetermined timing is equal to or greater than the misfire determination value Kth (step S5). In the case where the engine microcomputer 30 determines that the misfire determination number Kn of the pulse P is smaller than the misfire determination value Kth (No in step S5), the engine microcomputer 30 determines whether or not the pulse number A, which is obtained since the current counting of the misfire determination number Kn is started, corresponds to a pulse number B (e.g. 240) corresponding to a number of predetermined cycles (step S6). In a case where the pulse number A is smaller than the pulse number B (No in step S6), an index "n" of the misfire determination number Kn specifying the update and the like is incremented by one (1) and the pulse number A is also incremented by one (1) (step S7). However, because the index "n" is limited to a range from one (1) to twenty-four (24) in response to one cycle, in a case where the pulse number A is incremented to twenty-five (25), the index "n" is reset to one (1). Then, the process is once terminated.

On the other hand, in a case where the engine microcomputer 30 determines that the pulse A corresponds to the pulse B (Yes in step S6), the engine microcomputer 30 determines that the updates and the like of all of the misfire determination numbers Kn are completed and the predetermined cycle ends, and then, the index "n" and the pulse A are both reset to one (1) and all of the misfire determination numbers Kn are reset to zero (0) (step S8). Then, the control is once terminated.

Accordingly, the update and the like of all of the misfire determination numbers Kn in response to the input of the pulses P are completed each time when the predetermined cycle ends through the processes in step S6 to step S8. Furthermore, in the case where the engine microcomputer 30 determines that the misfire determination number Kn at the predetermined timing is equal to or greater than the misfire determination value Kth (Yes in step S5), the engine microcomputer 30 determines that the rotational fluctuation frequently occurs in response to the misfire, in other words, the engine microcomputer 30 concludes that the misfire occurs at the corresponding cylinder 12 and immediately stops the engine 11 (step S9). Then, the process is terminated.

According to the embodiment, the following advantages and merits may be achieved. Firstly, according to the embodiment, the engine microcomputer 30 times the elapsed time T, which corresponds to the period of time until the pulses P outputted in the stroke TN representing the rotational angle of the crankshaft 15 to be formed in the period of time from when the combustion occurs at one of the cylinders 12 and when the next combustion occurs at another one of the cylinders 12, each time when the pulse P is inputted into the engine microcomputer 30. Then, the engine microcomputer 30 calculates the deviation DT between the first time TR and the second time TL. The deviation DT is the result of the comparison between the elapsed time T in one stroke TN (i.e. the first time TR) and the elapsed time T in the previous stroke TN (i.e. the second time TL). In other words, the deviation DT represents the result of the comparison between the combustion state of one of the cylinders 12 and the combustion state of another one of the cylinders 12 at which the combustion is executed prior to the one of the cylinders 12. Accordingly, the deviation DT significantly fluctuates in response to the occurrence of the misfire at any one of the cylinders 12. Furthermore, the fluctuation of the deviation DT continuously occurs within the stroke TN with reference to the timing when the deviation DT starts being influenced by the misfire as a starting point. Therefore, because the engine microcomputer 30 according to the embodiment is configured so as to integrate the deviation DT by the rotational angle corresponding to the stroke TN, the integrated value RC is calculated as an accumulation and an emphasis of the fluctuation of the deviation DT in response to the occurrence of the misfire. Hence, the engine microcomputer 30 may accurately determine whether or not the misfire occurs at any one of the cylinders 12 (i.e. the engine 11) on the basis of the magnitude relationship between the integrated value RC and the determination value DR.

According to the embodiment, because the engine microcomputer 30 is configured so as to conclude the determination that the misfire occurs at any one of the cylinders 12 in the case where the corresponding misfire determination number Kn, which is counted in response to the pulse P at one timing in one cycle, is equal to or greater than the misfire determination value Kth, even if the magnitude relationship between the integrated value RC and the determination value DR temporarily indicates that the misfire occurs at any one of the cylinders 12 (i.e. the engine 11) because of the influence of a random rotational fluctuation that has no relation to the stroke TN (i.e. a noise, a load fluctuation, the disturbance (a strong wind), infrequent misfires and the like), the engine microcomputer 30 does not immediately conclude the determination of the misfire. Therefore, the process such as stopping the engine 11 and the like may be avoided from being frequently executed in response to each time when the misfire is determined.

For example, even if the engine 11 is driven in the high-speed low-load state, a specific misfire determination number Kn gradually increases in response to the repeat of the cycle in the case where the complete misfire occurs at one specific cylinder 12 to which the specific misfire determination number Kn is allocated. Therefore, even in the case where the engine 11 is driven in the high-speed low-load state, the engine microcomputer 30 may surely determine the misfire at any one specific cylinder 12.

Still further, the output timing of the pulse P, by which the engine microcomputer 30 concludes the determination of the misfire, within one cycle correlates with the timing of the combustion process of one specific cylinder 12 corresponding to the pulse P. Therefore, the correlation relationship between the output timing of the pulse P for concluding the determination of the misfire and the timing of the combustion process may be preliminarily obtained by an experiment and the like, so that the cylinder 12 causing the misfire may be estimated on the basis of the correlation relationship.

According to the embodiment, in the case where the determination that the misfire occurs at any one of the cylinders 12 (i.e. the engine 11) is concluded, the engine microcomputer 30 stops the engine 11 in order to avoid a burnout of the catalyst for purifying the exhaust gas, an occurrence of the abnormal vibration the like, which are likely to occur in response to the occurrence of the misfire.

According to the embodiment, because four cylinders 12 (12a, 12b, 12c and 12d) are arranged in tandem, a control of the rotational fluctuation occurring while the combustions are executed at the cylinders 12 at the equal intervals therebetween may be achieved with a simple configuration, while avoiding an enlargement of a size of the engine 11 in an arranging direction of the cylinders 12.

According to the embodiment, the misfire of any one of the cylinders 12 (i.e. the engine 11) may be determined without specifically designating one of the cylinders 12 whose rotational fluctuation is to be monitored or designating a point (the timing) to be monitored. Additionally, the misfire determination device for the multi-cylinder four-cycle engine may be modified as follows.

The engine microcomputer 30 may be modified so as to include an appropriate alarming device (e.g. a lamp, a speaker and the like) for informing an abnormal misfire to a user in the case where the engine microcomputer 30 concludes the determination that the misfire occurs at any one of the cylinders 12 (i.e. the engine 11) (Yes in step S5). In this case, the abnormal misfire is informed to the user by means of the alarming device, so that the user may recognize the abnormal misfire and promptly perform any necessary process and the like to solve the abnormal misfire.

The rotational angle of the crankshaft 15, which is used to integrate the deviation DT in the calculation of the integrated value RC, is not limited to the rotational angle corresponding to the stroke TN. For example, the deviations DT may be integrated by a half to one and half of the rotational angle corresponding to the stroke TN in order to obtain the integrated value.

Any desired number of the protrusions 33a may be formed at the rotor 33 as long as plural protrusions 33a are formed at the rotor 33 every 180 degrees of the crankshaft 15, in other words, as long as plural pulses P are generated in each stroke TN.

The misfire may be determined on the basis of the pulse P outputted each time when the cam shaft 28 (i.e. the rotor 35) is rotated by predetermined rotational angle. Furthermore, any desired number of cylinders 12, for example, six cylinders 12, may be provided at the engine 11 as long as the combustion processes of plural cylinders 12 are executed at equal intervals therebetween.

The engine 11 may be configured so as to drive, for example, a generator using waste heat of a co-generation system. Technical ideas conceivable from the above-described embodiment and modified examples will be described below.

The misfire determination device for the multi-cylinder four-cycle engine includes the alarming device for alarming the abnormal misfire to the user in the case where the determination that the misfire occurs at any one of the cylinders 12 (i.e. the engine 11) is concluded by the engine microcomputer 30. Accordingly, the abnormal misfire may be informed to the user by means of the alarming device, so that the user may promptly perform any necessary process for solving the abnormal misfire.

According to the misfire determination device for the multi-cylinder four-cycle engine, the engine 11 includes four cylinders 12 arranged in tandem. Accordingly, the control of the rotational fluctuation occurring in the case where the combustion processes of the cylinders 12 at the equal intervals therebetween may be achieved with the simple configuration while avoiding the enlargement of the size of the engine 11 in the arranging direction.

## Claims

1. A misfire determination device for a multi-cylinder engine (11) performing four strokes (TN) in one cycle, comprising

   - a rotor (33)

      connected to a crankshaft (15) of the engine (11) and
      having a plurality of protrusions (33a) distanced from each other by a predetermined angle (DN),

   - a crank position sensor (34) which generates and outputs a pulse (P) each time when each protrusion (33a) rotates by the predetermined angle (DN), and
   - an engine microcomputer (30) having

      - a timing means which times an elapsed time (T) each time when the pulse (P) is outputted from the crank position sensor (34) into the engine microcomputer (30), wherein the elapsed time (T) corresponds to a period of time until the pulses (P) are counted, which are inputted into the engine microcomputer (30) in one stroke (TN),
      - a deviation calculating means which calculates a deviation (DT) between a first time (TR), which represents the elapsed time (T) when a current pulse (P) is counted, and a second time (TL), which represents the elapsed time (T) when a pulse (P) obtained prior to the current pulse (P) is counted,

   **characterized in that** the engine microcomputer (30) further having

      - an integrated value calculating means which calculates an integrated value (RC) each time when the pulse (P) is outputted from the crank position sensor (34) into the engine microcomputer (30), wherein the integrated value (RC) is obtained by integrating the deviation (DT) by the rotational angle corresponding to one stroke (TN),
      - a determining means for determining whether a misfire occurs on the basis of a magnitude relationship between the integrated value (RC) and a determination value which serves as predetermined threshold value (DR) wherein the determination value (DR) is set on the basis of an optimal integrated value (RC),
- a counting means which increments a misfire determination number (Kn) by one when the determining means determine a misfire.

2. The misfire determination device for the multi-cylinder four-cycle engine (11) according to Claim 1, wherein the counting means separately counts a number of times when the misfire is determined on the basis of the magnitude relationship between the calculated integrated value (RC) and the predetermined threshold value (DR) in a rotational angle range of the crankshaft (15) corresponding to a predetermined number of cycles relative to each of all of the pulses (P) outputted at each different timing in one cycle, so that the determining means concludes a determination of the misfire in a case where the number of times counted relative to the pulse (P) at one specific timing in the one cycle exceeds a predetermined misfire determination value (Kth).

3. The misfire determination device for the multi-cylinder four-cycle engine (11) according to Claim 2 wherein the engine microcomputer (30) has a stopping means for stopping the multi-cylinder four-cycle engine (11) in a case where the determination means concludes the determination of the misfire at any one of the plurality of the cylinders (12).

4. The misfire determination device for the multi-cylinder four-cycle engine (11) according to any one of Claims 1 to 3, wherein the multi-cylinder four-cycle engine (11) is configured so as to drive a compressor of a heat pump-type air conditioning apparatus.

5. The misfire determination device for the multi-cylinder four-cycle engine (11) according to any one of Claims 1 to 4, wherein the multi-cylinder four-cycle engine (11) is configured so as to be actuated by a fuel gas.

**Patentansprüche**

1. Fehlzündungsbestimmungsvorrichtung für einen Mehrzylindermotor (11), der vier Takte (TN) in einem Zyklus ausführt, mit

- einem Rotor (33), der mit einer Kurbelwelle (15) des Motors (11) verbunden ist und eine Vielzahl an Überständen (33a) hat, die durch einen vorbestimmten Winkel (DN) voneinander beabstandet sind,
- einem Kurbelpositionssensor (34), der jedes Mal, wenn sich jeder Überstand (33a) um den vorbestimmten Winkel (DN) dreht, einen Impuls (P) generiert und ausgibt, und
- einem Motor-Mikrocomputer (30) mit

einer Zeitgebereinrichtung, die jedes Mal, wenn der Impuls (P) von dem Kurbelpositionssensor (34) in den Motor-Mikrocomputer (30) ausgegeben wird, eine verstrichene Zeit (T) aufzeichnet, wobei die verstrichene Zeit (T) einer Zeitperiode entspricht, bis die Impulse (P) gezählt werden, die in den Motor-Mikrocomputer (30) in einem Takt (TN) eingegeben werden,
einer Abweichungsberechnungseinrichtung, die eine Abweichung (DT) zwischen einer ersten Zeit (TR), die der verstrichenen Zeit (T) entspricht, wenn ein gegenwärtiger Impuls (P) gezählt wird, und einer zweiten Zeit (TL) berechnet, die der verstrichenen Zeit (T) entspricht, wenn ein Impuls (P), der vor dem gegenwärtigen Impuls (P) erhalten wird, gezählt wird,
**dadurch gekennzeichnet, dass**
der Motor-Mikrocomputer (30) Folgendes aufweist
- eine integrierte Werteberechnungseinrichtung, die jedes Mal einen integrierten Wert (RC) berechnet, wenn der Impuls (P) von dem Kurbelpositionssensor (34) in den Motor-Mikrocomputer (30) ausgegeben wird,
wobei der integrierte Wert (RC) durch die Integration der Abweichung (DT) um den Rotationswinkel, die einem Takt (TN) entspricht, erhalten wird
- ein Bestimmungsmittel, um zu bestimmen ob eine Fehlzündung auf Grundlage eines Größenverhältnisses zwischen dem integrierten Wert (RC) und einem Bestimmungswert, der als vorbestimmter Schwellenwert (DR) dient, auftritt, wobei der Bestimmungswert (DR) auf Grundlage eines optimalen integrierten Wertes (RC) eingestellt ist,
- ein Zählmittel, das eine Fehlzündungsbestimmungszahl (Kn) um eins erhöht, wenn das Bestimmungsmittel eine Fehlzündung bestimmt.

2. Fehlzündungsbestimmungsvorrichtung für den Mehrzylinder-Viertaktmotor (11) nach Anspruch 1, wobei das Zählmittel separat eine Anzahl an Zeitpunkten zählt, wenn die Fehlzündung auf Grundlage des Größenverhältnisses zwischen dem kalkulierten integrierten Wert (RC) und dem vorbestimmten Schwellenwert (DR) in einem Drehwinkelbereich der Kurbelwelle (15) bestimmt wird, die einer vorbestimmten Anzahl an Zyklen relativ zu jedem einzelnen der Impulse (P) entspricht, die zu jedem unterschiedlichen Zeitpunkt in einem Zyklus ausgegeben werden, so dass das Bestimmungsmittel eine Bestimmung der Fehlzündung in einem Fall abschließt, in dem die Anzahl der Zeitpunkte, die relativ zu dem Impuls (P) eines spezifischen Zeitpunkts in einem Zyklus gezählt wurden, einen vorbestimmten Fehlzündungsbestimmungswert (Kth) überschreitet.

**3.** Fehlzündungsbestimmungsvorrichtung für den Mehrzylinder-Viertaktmotor (11) nach Anspruch 2, wobei der Motor-Mikrocomputer (30) eine Stoppeinrichtung aufweist, um den Mehrzylinder-Viertaktmotor (11), in einem Fall, in dem das Bestimmungsmittel die Bestimmung der Fehlzündung an einem der Vielzahl der Zylindern (12) abschließt, zu stoppen.

**4.** Fehlzündungsbestimmungsvorrichtung für den Mehrzylinder-Viertaktmotor (11) nach einem der Ansprüche 1 bis 3, wobei der Mehrzylinder-Viertaktmotor (11) so konfiguriert ist, dass er einen Kompressor einer Wärmepumpen-Klimatisierungsvorrichtung antreibt.

**5.** Fehlzündungsbestimmungsvorrichtung für den Mehrzylinder-Viertaktmotor (11) nach einem der Ansprüche 1 bis 4, wobei der Mehrzylinder-Viertaktmotor (11) so konfiguriert ist, dass er durch Kraftstoffgas betrieben wird.

## Revendications

**1.** Dispositif de détermination de raté d'allumage pour un moteur polycylindrique (11) exécutant quatre courses de piston (TN) en un cycle, comprenant

- un rotor (33) :

relié à un vilebrequin (15) du moteur (11) et présentant une pluralité de saillies (33a) espacées les unes des autres par un angle prédéterminé (DN),

- un capteur de position de bras de manivelle (34) qui génère et fournit en sortie une impulsion (P) chaque fois que chaque saillie (33a) tourne selon l'angle prédéterminé (DN), et
- un micro-ordinateur de moteur (30) présentant :

- un moyen de temporisation qui temporise un temps écoulé (T) à chaque fois que l'impulsion (P) est fournie en sortie par le capteur de position de bras de manivelle (34) dans le micro-ordinateur de moteur (30), dans lequel le temps écoulé (T) correspond à une période de temps jusqu'à ce que les impulsions (P) soient comptées, lesquelles sont appliquées en entrée dans le micro-ordinateur de moteur (30) en une seule course de piston (TN),
- un moyen de calcul d'écart qui calcule un écart (DT) entre un premier instant (TR), qui représente le temps écoulé (T) lorsqu'une impulsion en cours (P) est comptée, et un second instant (TL), qui représente le temps écoulé (T) lorsqu'une impulsion (P) obtenue avant l'impulsion en cours (P) est comptée,

**caractérisé en ce que**
le micro-ordinateur de moteur (30) présente en outre :

- un moyen de calcul de valeur intégrée qui calcule une valeur intégrée (RC) à chaque fois que l'impulsion (P) est fournie sortie à partir du capteur de position de bras de manivelle (34) dans le micro-ordinateur de moteur (30), dans lequel la valeur intégrée (RC) est obtenue en intégrant l'écart (DT) par l'angle de rotation correspondant à une course de piston (TN),
- un moyen de détermination pour déterminer si un raté d'allumage se produit sur la base d'une relation de grandeur entre la valeur intégrée (RC) et une valeur de détermination qui sert de valeur de seuil prédéterminée (DR), dans lequel la valeur de détermination (DR) est définie sur la base d'une valeur intégrée optimale (RC),
- un moyen de comptage qui incrémente un nombre de déterminations de raté d'allumage (Kn) de « 1 » lorsque le moyen de détermination détermine un raté d'allumage.

**2.** Dispositif de détermination de raté d'allumage pour le moteur polycylindrique à quatre temps (11) selon la revendication 1, dans lequel le moyen de comptage compte séparément un nombre de fois où le raté d'allumage est déterminé sur la base de la relation de grandeur entre la valeur intégrée calculée (RC) et la valeur de seuil prédéterminée (DR) dans une plage d'angle de rotation du vilebrequin (15) correspondant à un nombre prédéterminé de cycles relatifs à chacune des impulsions (P) fournies en sortie à chaque temporisation différente dans un cycle, de sorte que le moyen de détermination conclut à une détermination du raté d'allumage dans le cas où le nombre de fois compté relatif à l'impulsion (P) à une temporisation spécifique dans ledit un cycle dépasse une valeur de détermination de raté d'allumage prédéterminée (Kth).

**3.** Dispositif de détermination de raté d'allumage pour le moteur polycylindrique à quatre temps (11) selon la revendication 2, dans lequel le micro-ordinateur de moteur (30) présente un moyen d'arrêt pour arrêter le moteur polycylindrique à quatre temps (11) dans un cas où le moyen de détermination conclut à la détermination du raté d'allumage sur un cylindre quelconque de la pluralité des cylindres (12).

**4.** Dispositif de détermination de raté d'allumage pour le moteur polycylindrique à quatre temps (11) selon l'une quelconque des revendications 1 à 3, dans lequel le moteur polycylindrique à quatre temps (11) est configuré de manière à entraîner un compresseur d'un appareil de climatisation de type pompe à chaleur.

5. Dispositif de détermination de raté d'allumage pour le moteur polycylindrique à quatre temps (11) selon l'une quelconque des revendications 1 à 4, dans lequel le moteur polycylindrique à quatre temps (11) est configuré de manière à être commandé par un gaz combustible.

# FIG. 1

Air

Fuel gas

Igniter — 32

Engine microcomputer — 30

Exhaust gas

EP 2 410 311 B1

# F I G. 2 A

# F I G. 2 B

# F I G. 3

# FIG. 4

Pulse number CNT

# FIG. 5

Pulse number A (CNT)

# F I G. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008190433 A
- DE 4403348 A1
- EP 0790396 A2
- US 5287737 A
- EP 1918688 A